# EUROPEAN PATENT SPECIFICATION

(11) **EP 2 444 267 B1**
(45) Date of publication and mention of the grant of the patent: **24.04.2013**
(21) Application number: 11185988.0
(22) Date of filing: 20.10.2011
(51) Int. Cl.: B60K 15/00

(54) **A fuel tank**
Brennstofftank
Réservoir d'essence

(30) Priority: 21.10.2010 TR 201008685
(43) Date of publication of application: 25.04.2012
(73) Proprietor: Coskunoz Metal Form, Makina Endustri Ve Ticaret Anonim Sirketi, Bursa (TR)
(72) Inventor: Uysal, Gokalp, Bursa (TR)
(74) Representative: Dericioglu, Ekin

(56) References cited:
- WO-A1-2005/053987
- DE-A1- 4 433 301
- DE-A1- 19 606 247
- JP-A- 11 264 355
- US-A1- 2004 168 678
- US-B1- 6 253 738

## Description

### Field of the Invention

The present invention relates to a fuel tank used in vehicles.

### Background of the Invention

The fuel tanks are the closed chambers wherein the fuel providing the energy needed by the vehicle to move is stored.

Today problems are encountered during the stage of fixing the float systems to the fuel tank. First a lower plate is welded to the tank in fixing the float system to the fuel tank. Connection members like screws are fixed onto the said lower plate, the float system is located on the fuel tank provided with the lower plate, and then the upper plate having holes thereon is screwed and tightened with bolts. By this means the float system is fixed on the tank. Fixing the lower plate located on the tank to the upper plate with screw/bolt connection causes high material and labor costs.

The United States Patent document no. US3270770 discloses a generic fuel tank.

The United States patent document no. US3835882 discloses a valve assembly which can be assembled and disassembled easily. Swiftness and easiness are provided during assembly by using a plastic frame and flat head screw with this device.

The United States patent document no. US5632296 discloses an improved float fuel valve. There are screw sockets thereon for the assembly of this device.

### Summary of the Invention

The objective of the present invention is to realize a fuel tank wherein the upper plate is fixed to the lower plate by rotating.

The objective of the present invention is to realize a fuel tank wherein the costs of labor and materials are decreased.

### Detailed Description of the Invention

A fuel tank realized to fulfill the objective of the present invention is illustrated in the accompanying figures wherein,

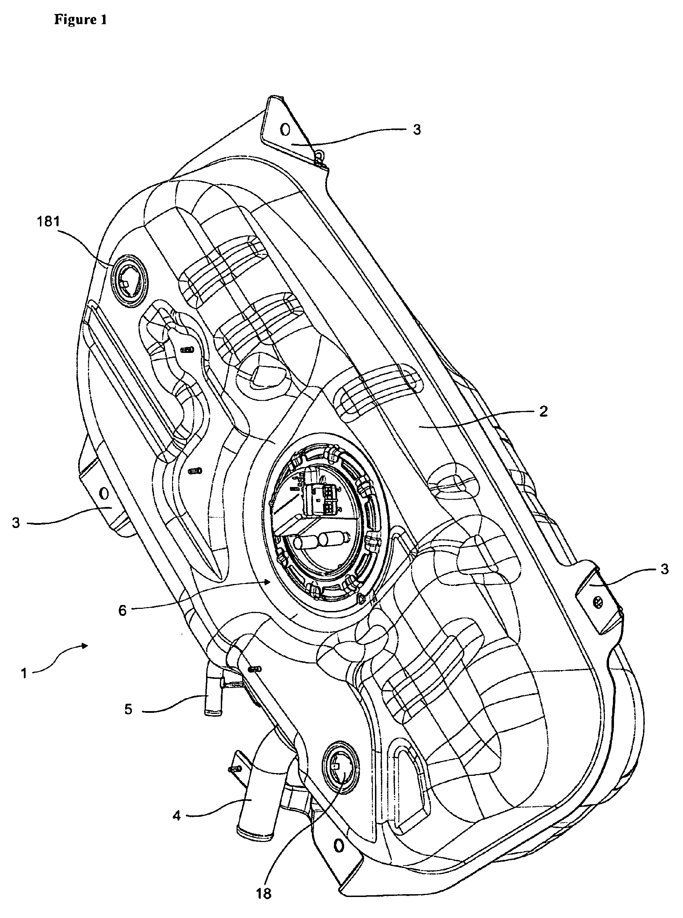

**Figure 1** is the perspective view of the inventive fuel tank.

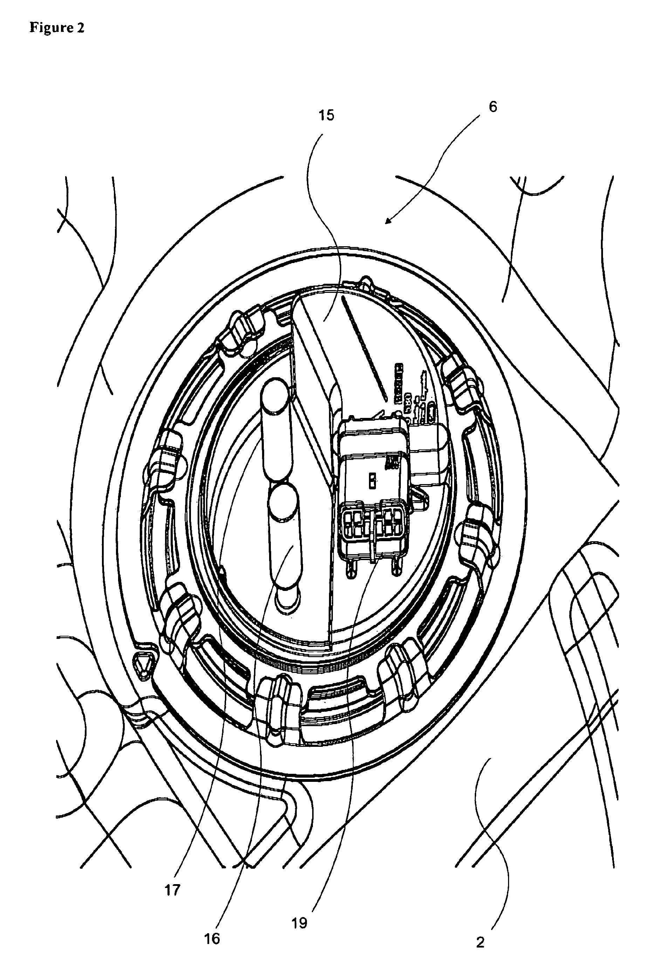

**Figure 2** is the perspective view of the fixation apparatus on the fuel tank.

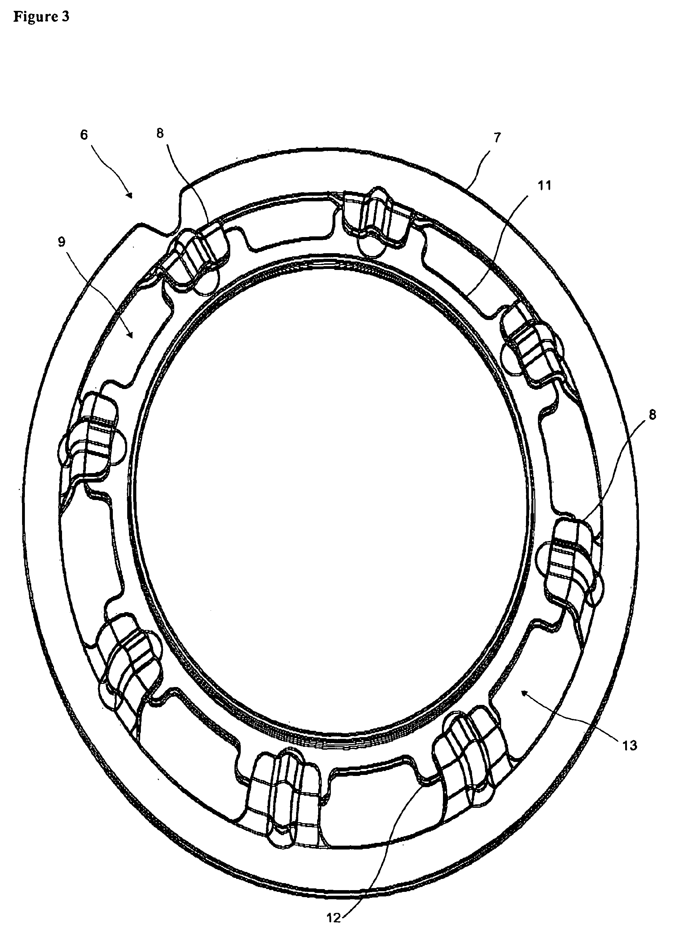

**Figure 3** is the perspective view of the fixation apparatus in a locked position.

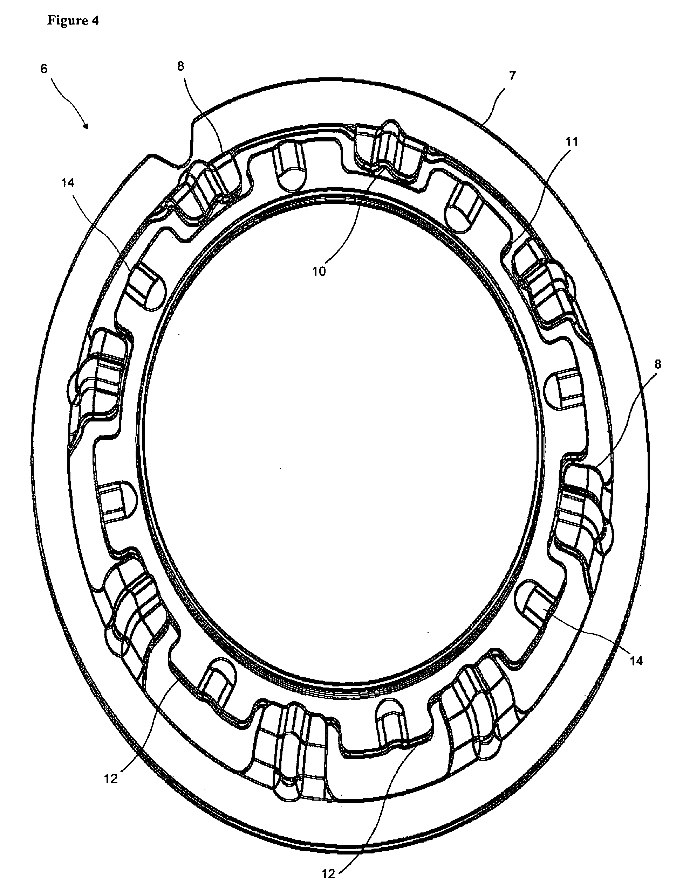

**Figure 4** is the perspective view of the fixation apparatus in an unlocked position.

The components in the figures are numbered individually, where the numbers refer to the following:
1. Tank
2. Body
3. Flange
4. Fuel inlet pipe
5. Vent pipe
6. Fixation apparatus
7. Lower part
8. Tab
9. Space
10. Slot
11. Upper part
12. Tab
13. Space
14. Protrusion
15. Float
16. Float fuel inlet pipe
17. Float fuel outlet pipe
18. 181. Slot
19. Connection member

The inventive tank (1) essentially comprises
- at least one body (2) wherein the fuel is therein,
- at least one fuel inlet pipe (4) wherein the fuel is filled in the body (2),
- at least one fuel vent pipe (5) which directs the vaporized fuel to the fuel inlet pipe (4),
- at least one fixation apparatus (6) which has at least one lower part (7) fixed onto the body (2) and at least one upper part (11) wherein the lower part (7) is fixed thereon,
- at least one float (15) which has at least one fuel inlet pipe (16) and at least one fuel outlet pipe (17), is fixed onto the body (2) with the help of the upper part (11),
- at least two slots (18, 181) wherein the valve used in discharging the vapor formed in the body (2) is located,
- at least one connection member (10) which enables the driver to be informed about the fuel quantity in the body (2).

In a preferred embodiment of the invention the body (2) is connected to the vehicle with the help of at least one flange (3).

In another embodiment of the invention, the body (2) is connected to the vehicle with the help of a connection member. Preferably a belt is used as a connection member.

The lower part (7) comprises at least two tabs (8) which are formed such that a space will be between them, have two surfaces one of which faces the vehicle and the other faces the body (2); at least two spaces (9) which are located between the tabs (8); and at least one slot (10) which is located on the surface of the tab (8) facing the body (2).

The upper part (11) comprises at least two tabs (12) which are formed such that a space will be between them, have two surfaces one of which faces the vehicle and the other faces the body (2); at least two spaces (13) which are located between the tabs (12); and at least one protrusion (14) which is located on the surface of the tab (12) facing the vehicle and fits into the slot (10).

In the preferred embodiment of the invention, the lower part (7) is in the form of a hollow circle. The lower part (7) is fixed onto the body (2) by welding. The tabs (8) located on the lower part (7) extend towards the center of the lower part (7). Preferably the tabs (8) extend towards the vehicle from the body (2) wherein the lower part (7) is fixed.

In the preferred embodiment of the invention, the upper part (11) is in the form of hollow circle. The float (15) is fixed onto the body (2) upon the upper part (11) is fixed to the lower part (7) and the upper part (11) contacts the float (15). The upper part (11) enables the float (15) to remain fixed on the body (2) by applying pressure on the float (15). The upper part (11) has a width that the float (15) cannot go out in order that the float (15) is fixed onto the body (2).

During the upper part (11) being fixed to the lower part (7), the tabs (12) are enabled to correspond to the spaces (9) located on the lower part (7). Upon the tabs (12) correspond to the spaces (9), the upper part (11) is rotated and the protrusions (14) located on the tabs (12) fit into the slots (10). By this means the upper part (11) is enabled to be locked onto the lower part (7) and at the same time the float (15) is enabled to be fixed onto the body (2).

In a preferred embodiment of the invention, eight tabs (8) are located on the lower part (7) in equal intervals. Similarly there are eight tabs (12) located on the upper part (11) in equal intervals.

In a preferred embodiment of the invention the connection member (19) is a socket. The socket preferably is located on the float (15).

In the inventive fuel tank (1) structure of the lower part (7) and the upper part (11) having tabs (8, 12), spaces (9, 13), a slot (10) and a protrusion (14) are produced from a single sheet with pressing method. A lower and upper part (7, 11) are obtained from a single sheet. By this means waster material difference is overcome caused by the lower and the upper parts (7, 11) being produced from separate sheets.

In the inventive fuel tank (1) first the lower part (7) is fixed onto the body (2) by welding. The float (15) is located on the body upon the lower part (7) is fixed. After the float (15) is located onto the body (2), the upper part (11) is located on the body (2) over the float (15) upon the tabs (12) correspond to the spaces (9) located on the lower part (7). The upper part (11) is rotated on the body (2) clockwise or counterclockwise. The said movement is ended upon the protrusions (14) on the upper part (11) fit into the slots (10) on the lower part (7). Upon the protrusions (14) fit into the slots (10) the upper part (11) is fixed on the lower part (11) and at the same time the float (15) is fixed on the body (2).

With the fixation apparatus (6) used in the inventive fuel tank (1), the float (15), the float fuel inlet and outlet pipes (16, 17) are enabled to be fixed on the body (2), thus the fuel tank (1) without the necessity of screw bolt connection.

## Claims

1. A fuel tank (1) comprising
- at least one body (2) wherein the fuel is therein,
- at least one fuel inlet pipe (4) wherein the fuel is filled in the body (2),
- at least one fuel vent pipe (5) which directs the vaporized fuel to the fuel inlet pipe (4),
- at least one fixation apparatus (6) which has at least one lower part (7) fixed onto the body (2) and at least one upper part (11) wherein the lower part (7) is fixed thereon,
- at least one float (15) which has at least one fuel inlet pipe (16) and at least one fuel outlet pipe (17), is fixed onto the body (2) with the help of the upper part (11),
- at least two slots (18, 181) wherein the valve used in discharging the vapor formed in the body (2) is located,
- at least one connection member (10) which enables the driver to be informed about the fuel quantity in the body (2), and **characterized in that**
the lower part (7) comprises at least two tabs (8) which are formed such that a space will be between them, have two surfaces one of which faces the vehicle and the other faces the body (2); at least two spaces (9) which are located between the tabs (8); and at least one slot (10) which is located on the surface of the tab (8) facing the body (2),
the upper part (11) comprises at least two tabs (12) which are formed such that a space will be between them, have two surfaces one of which faces the vehicle and the other faces the body (2); at least two spaces (13) which are located between the tabs (12); and at least one protrusion (14) which is located on the surface of the tab (12) facing the vehicle and fits into the slot (10).

2. A fuel tank (1) according to claim 1, **characterized by** a lower part (7) which is in the form of a hollow circle.

3. A fuel tank (1) according to claim 2, **characterized by** tabs (8) extending to the center of the lower part (7).

4. A fuel tank (1) according to any of the preceding claims, **characterized by** an upper part (11) which is in the form of a hollow circle.

5. A fuel tank (1) according to claim 4, **characterized by** an upper part (11) which fixed the float (15) on the body (2) upon its fixation to the lower part (7) and contact float (15).

6. A fuel tank (1) according to claim 6, **characterized by** upper part (11) which has a width that the float (15) cannot go out in order that the float (15) is fixed on the body (2).

7. A fuel tank (1) according to any of the preceding claims, **characterized by** tabs (12) which correspond to spaces (9) located on the lower part (7) during the upper part (11) being fixed to the lower part (7).

8. A fuel tank (1) according to claim 7, **characterized by** an upper part (11) the tabs (12) of which correspond the spaces (9) and which enable the protrusions (14) on the tab (12) to fit into the slots (10) by being rotated on the body (2).

9. A fuel tank (1) according to any of the preceding claims, **characterized by** at least eight tabs (8) which are located on the lower part (7) in equal intervals.

10. A fuel tank (1) according to any of the preceding claims, **characterized by** at least eight tabs (12) which are located on the upper part (11) in equal intervals.

11. A fuel tank (1) according to any of the preceding claims, **characterized by** a connection member (19) which is a socket.

12. A fuel tank (1) according to any of the preceding claims, **characterized by** at least one flange (3) which is used in connection of the body (2) to the vehicle.

13. A fuel tank (1) according to any of the preceding claims, **characterized by** a lower part (7) and an upper part (11) wherein the structure having tabs (8, 12), spaces (9, 13), a slot (10) and a protrusion (14) which they comprise are produced from a single sheet with pressing.

## Patentansprüche

1. Ein Brennstofftank umfassend,
mindestens einen Körper (2) worin der Brennstoff gefüllt wird,
mindestens ein Brennstoff-Einlassrohr (4), wodurch der Brennstoff in den Körper (2) gefüllt wird,
mindestens ein Brennstoff-Lüftungsrohr, welches den verdampften Brennstoff zum Brennstoff-Einlassrohr (4) leitet,
mindestens eine Befestigungseinrichtung (6), die mindestens einen auf den Körper (2) befestigten unteren Teil (7) und mindestens einen oberen Teil (1) aufweist, wobei der untere Teil (7) daran befestigt ist,
mindestens einen Schwimmer (15), der zumindest ein Brennstoff-Einlassrohr (16) und zumindest ein Brennstoff-Auslassrohr (17) aufweist und der mit Hilfe des oberen Teils (11) an dem Körper (2) befestigt ist,
mindestens zwei Aussparungen (18, 181), worin das bei der Abführung des im Körper (2) gebildeten Dampfes eingesetzte Ventil angeordnet ist,
mindestens ein Verbindungselement (10), welches ermöglicht, dass der Fahrer über die Brennstoffmenge im Körper (2) informiert wird und **dadurch gekennzeichnet,**
**dass** der untere Teil (7) mindestens zwei Laschen (8) aufweist, die so gebildet sind, dass es zwischen denen einen Raum gibt und zwei Flächen aufweist, von denen eine dem Fahrzeug zugewandt und die andere dem Körper (2) zugewandt ist; mindestens zwei Abstände (9), welche zwischen den Laschen (8) angeordnet sind und mindestens eine Aussparung (10), welche auf der Oberfläche der dem Körper (2) zugewandten Lasche angeordnet ist,
**dass** der obere Teil (11) zumindest zwei Laschen (12) umfasst, welche so gebildet sind, dass zwischen denen ein Abstand vorliegt und zwei Flächen aufweist, von denen eine dem Fahrzeug und die andere dem Körper (2) zugewandt ist; mindestens zwei Räume (13), die zwischen den Laschen (12) angeordnet sind; und mindestens einen Vorsprung (14), der zwischen den dem Fahrzeug zugewandten Laschen (12) angeordnet und in die Aussparung (10) eingesetzt ist.

2. Ein Brennstofftank (1) nach Anspruch 1, **gekennzeichnet durch** einen unteren Teil (7), der in Form eines hohlen Kreises ist.

3. Ein Brennstofftank (1) nach Anspruch 2, **gekennzeichnet durch** Laschen (8), die sich bis zum Mittelpunkt des unteren Teils (7) erstrecken.

4. Ein Brennstofftank (1) nach einem der vorangehenden Ansprüche, **gekennzeichnet durch** einen unteren Teil (11), der in Form eines hohlen Kreises ist.

5. Ein Brennstofftank (1) nach Anspruch 4, **gekennzeichnet durch** einen unteren Teil (11), der **durch** Befestigung am unteren Teil (7) und den Kontakt an den Schwimmer (15), den Schwimmer (15) auf dem Körper (2) befestigt.

6. Ein Brennstofftank (1) nach Anspruch 6, **gekennzeichnet durch** den unteren Teil (11), der eine Breite aufweist, so dass der Schwimmer (15) nicht hinausgehen kann, damit der Schwimmer (15) am Körper befestigt ist.

7. Ein Brennstofftank (1) nach einem der vorangehenden Ansprüche, **gekennzeichnet durch** Laschen (12), welche den am unteren Teil (7) angeordneten Räumen (9) entsprechen, während der obere Teil (11) an dem unteren Teil (7) befestigt ist.

8. Ein Brennstofftank (1) nach Anspruch 7, **gekennzeichnet durch** einen oberen Teil (11), dessen Laschen (12) den Räumen (9) entsprechen und welche ermöglichen, dass die Vorsprünge (14) an der Lasche (12) **durch** Schwenkung auf dem Körper (2) in die Aussparungen (10) eingesetzt sind.

9. Ein Brennstofftank (1) nach einem der vorangehenden Ansprüchen, **gekennzeichnet durch** mindestens acht Laschen (8), die auf dem unteren Teil (7) in gleichbleibenden Abständen angeordnet sind.

10. Ein Brennstofftank (1) nach einem der vorangehenden Ansprüchen, **gekennzeichnet durch** mindestens acht Laschen (12), die auf dem oberen Teil (11) in gleichbleibenden Abständen angeordnet sind.

11. Ein Brennstofftank (1) nach einem der vorangehenden Ansprüche, **gekennzeichnet durch** ein Verbindungselement (19), der einen Ansatz darstellt.

12. Ein Brennstofftank (1) nach einem der vorangehenden Ansprüche, **gekennzeichnet durch** mindestens einen Flansch, der bei der Verbindung des Körpers (2) an dem Fahrzeug gebraucht wird.

13. Ein Brennstofftank (1) nach einem der vorangehenden Ansprüche, **gekennzeichnet durch** einen unteren Teil (7) und einen oberen Teil (11), wobei diese einen Aufbau mit Laschen (8, 12), Räumen (9, 13), einer Aussparung (10) und einem Vorsprung (14) aufweisen, der **durch** Stanzen aus einer einzigen Platte hergestellt ist.

## Revendications

1. Un réservoir de carburant (1) comportant
- au moins un corps (2) à l'intérieur duquel se situe le carburant,
- au moins un tuyau d'arrivée de carburant (4) par lequel le corps (2) est rempli du carburant,
- au moins un tuyau d'aération (5) dirigeant le carburant vaporisé au tuyau d'arrivée de carburant (4),
- au moins un dispositif de fixation (6) possédant au moins un partie inférieure (7) fixée sur le corps (2) et au moins une partie supérieure (11) sur laquelle est fixée la partie inférieure (7),
- au moins un flotteur (15) possédant au moins un tuyau d'arrivé de carburant (16) et au moins un tuyau de vidange de carburant (17) et fixée sur le corps (2) à l'aide de la partie supérieure (11),
- au moins deux logements (18, 181) dans lesquels se situe la valve utilisée pour décharger le vapeur formé à l'intérieur du corps,
- au moins un membre de connexion (10) permettant le chauffeur d'être informé à propos de la quantité de carburant à l'intérieur du corps, et **caractérisé par le fait que** la partie inférieure (7) comporte au moins deux onglets (8) formés de façon qu'il y aura un espace entre eux, possédant deux surfaces dont l'une fait face au véhicule et l'autre fat face au corps (2) ; au moins deux espaces (9) placés entre les onglets (8) ; et au moins un logement (10) placé sur la surface de l'onglet (8) faisant face au corps (2),
la partie supérieure (11) comporte aux moins deux onglets (12) formé de façon qu'il y aura un espace entre eux, possédant deux surface dont l'une fait face au véhicule et l'autre fait face au corps (2) ; au moins deux espaces (13) placé entre les onglets (12) ; et au moins une protrusion (14) placée sur la surface de l'onglet (12) faisant face au véhicule et s'adaptant au logement (10).

2. Un réservoir de carburant selon la revendication 1, **caractérisé par** une partie inférieure en forme d'un cercle creux.

3. Un réservoir de carburant selon la revendication 2, **caractérisé par** les onglets (8) s'étendant au centre de la partie inférieure (7).

4. Un réservoir de carburant (1) selon l'une quelconque des revendications précédentes, **caractérisé par** une partie supérieure en forme d'un cercle creux.

5. Un réservoir de carburant (1) selon la revendication 4, **caractérisé par** une partie supérieure (11) fixée sur le flotteur (15) sur le corps (2) dès sa fixation à la partie inférieure (7) et au flotteur de contact (15).

6. Un réservoir de carburant (1) selon la revendication 6, **caractérisé par** une partie supérieure (11) ayant une largeur tel que le flotteur (15) ne peut pas sortir afin que le flotteur (15) soit fixé sur le corps (2).

7. Un réservoir de carburant selon l'une quelconque des revendications précédentes, **caractérisé par** les onglets (12) correspondant aux espaces (9) placés sur la partie inférieure (7) pendant que la partie supérieure (11) est fixée à la partie inférieure (7).

8. Un réservoir de carburant (1) selon la revendication 7, **caractérisé par** une partie supérieure (11) dont ses onglets (12) correspondent aux espaces (9) et permettent les protrusions (14) sur l'onglet (12) à s'adapter aux logements (10) en pivotant sur le corps (2).

9. Un réservoir de carburant (1) selon l'une quelconque des revendications précédentes, **caractérisé par** au moins huit onglets (8) placés sur la partie inférieure (7) en intervalles équivalents.

10. Un réservoir de carburant (1) selon l'une quelconque des revendications précédentes, **caractérisé par** au moins huit onglets (8) placés sur la partie supérieure (11) en intervalles équivalents.

11. Un réservoir de carburant selon l'une quelconque des revendications précédentes, **caractérisé par** un membre de connexion (1) qui est une prise.

12. Un réservoir de carburant (1) selon l'une quelconque des revendications précédentes, **caractérisé par** au moins une bride de raccordement (3) utilisé pour la connexion du corps (2) au véhicule.

13. Un réservoir de carburant selon l'une quelconque des revendications précédentes, **caractérisé par** une partie inférieure (7) et une partie supérieure dont la structure possédant des onglets (8, 12), des espaces (9, 13), un logement (10), et une protrusion (14) est réalisée en une seule feuille par pression.
